# EUROPEAN PATENT SPECIFICATION

(11) **EP 2 857 222 B1**
(45) Date of publication and mention of the grant of the patent: **07.12.2016**
(21) Application number: 14167961.3
(22) Date of filing: 12.05.2014
(51) Int. Cl.: B60B 30/06, B66F 7/26, B66F 7/28, B60B 29/00

(54) **Adjustable wheel rack**
Einstellbares Radgestell
Grille de roue réglable

(30) Priority: 04.10.2013 TW 102218617; 11.10.2013 CN 201320625529 U; 05.12.2013 US 201314098074
(43) Date of publication of application: 08.04.2015
(73) Proprietor: MVP (HK) Industries, Ltd., Tsimshatsui, Kowloon, Hong Kong (HK)
(72) Inventor: Shaw, William, Santa Clara, CA California 95054 (US)
(74) Representative: m patent group

(56) References cited:
- EP-A2- 0 486 431
- WO-A1-00/55031
- US-A- 5 618 228
- US-A1- 2013 240 696

## Description

### CROSS-REFERENCE TO RELATED APPLICATIONS

This application claims priority to Taiwanese patent application number 102218617, filed October 4, 2013; this application also claims priority to Chinese patent application number 201320625529.3, filed October 11, 2013.

### BACKGROUND

Vehicle lifts come in various sizes. Consequently, add on devices, such as wheel racks, are manufactured specifically for each size of jamb provided with different vehicle lifts. Purchasing a separate wheel rack for each different jamb and/or vehicle lift is expensive and duplicative. Devices and methods set forth herein may provide for an adjustable wheel rack for use with various vehicle lifts and jamb sizes.

Document WO 00/55031 describes a tire support apparatus for use in association with an automotive hoist for supporting a tire/wheel assembly, comprising: a mount body adapted to be secured to the hoist; and a support body disposed on the mount body, the support body having a spindle or other support member sized and adapted to receive a tire/wheel assembly placed thereon.

### SUMMARY

The following presents a simplified summary of the invention in order to provide a basic understanding of some aspects of the invention. This summary is not an extensive overview of the invention. It is not intended to identify critical elements of the invention or to delineate the scope of the invention. Its sole purpose is to present some concepts of the invention in a manner that is easily understood as an introduction to the more detailed description which follows.

According to invention, a wheel rack includes a locking frame plate having a
first L-shaped plate, a second L-shaped plate, and a stopper plate. A ball seat is fixed to the locking frame plate, and a rod has a first end with a sphere attached thereto. The locking frame plate is configured to be fixed to a jamb of a vehicle lift.

Furthermore, a wheel rack includes a locking frame plate
having a first L-shaped plate, a second L-shaped plate, and a stopper plate. In one embodiment a ball seat is
fixed to the locking frame plate. The wheel rack also includes a locking seat and a rod that has an end with a sphere attached thereto. The locking frame plate is configured to be fixed to a jamb of a vehicle lift.

According to invention, a method of using a wheel rack includes
providing a locking frame plate that includes a first L-shaped plate having a horizontal contact surface and a vertical contact surface, a second L-shaped plate having a horizontal contact surface and a vertical contact surface, and a stopper plate. At least one aperture in the horizontal contact surface of the first L-shaped plate aligns with one aperture in the vertical contact surface of the second L-shaped plate and the plates are securely fastened.

A locking seat, and a rod having a first end and a second end, where a sphere is attached to the first end and a stopper is attached to the second end is provided.

The method further includes providing a ball seat which is fixed to the locking frame plate. The ball seat includes a ball receiving plate having a cavity and a protruding block that is secured to the ball receiving plate. The protruding block has at least one recessed area for accommodating the rod.

The sphere is secured between the cavity of the ball receiving plate and the locking seat, and may be rotated such that the rod is in a substantially perpendicular position relative to the vertical contact surface of the first L-shaped plate. The rod is placed in at the at least one recessed area of the protruding block, and the wheel is placed on the rod.

### BRIEF DESCRIPTION OF THE DRAWINGS

Illustrative embodiments of the present invention are described in detail below with reference to the attached drawing figures.
FIG. 1 is an exploded perspective view of a wheel rack, according to one embodiment of the invention.
FIG. 2 is a perspective view of the wheel rack of FIG. 1.
FIG. 3 is a front view, showing the wheel rack of FIG. 1 in use.
FIG. 4 is a perspective view of the wheel rack of FIG. 1 showing the rod in motion.
FIG. 5 is a front view of the wheel rack of FIG. 4 showing the rod in motion.
FIG. 6 is a side view, showing the wheel rack of FIG. 1 in use.

### DETAILED DESCRIPTION

Embodiments of the present invention provide a type of adjustable wheel rack in combination with a vehicle lift system to provide an easily adaptable and accessible station to store a wheel, facilitating vehicle maintenance work.

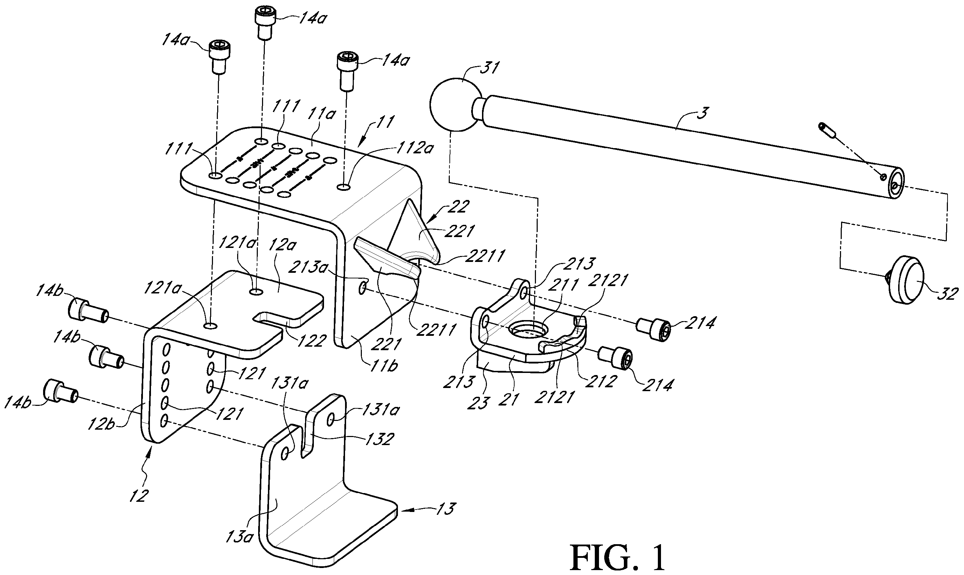

The wheel rack is described in detail with reference to FIGs. 1 through 6. The rack includes a locking frame plate 1, a stopper plate 13, a ball seat 2, a locking seat 22, and a rod 3.

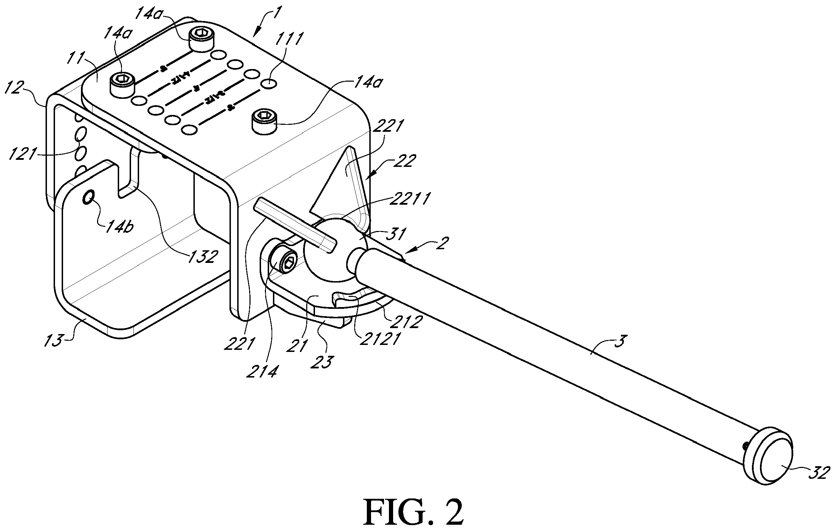

The locking frame plate 1 may be formed, for example, by fastening together a first L-shaped plate 11 and a second L-shaped plate 12. A horizontal contact surface 11a of the first L-shaped plate 11 contacts a horizontal contact surface 12a of the second L-shaped plate 12 in forming the locking frame plate 1. Bolt holes 111 may be drilled along the length of the horizontal contact surface of the first L-shaped plate 11a. For example, FIGs. 1 and 2 show five rows of bolt holes 111 drilled into the horizontal contact surface 11a at intervals of 3", 3-1/2", 4", 4-1/2", and 5". Additional or fewer bolt holes 111 may be drilled into the horizontal contact surface 11a, and some embodiments may include continuous elongated slots instead of individual holes.

While reference is made herein to bolts 14a, 14b, 214 and bolt holes 111, 121, 121a, 131a, 213, openings drilled or formed into the first L-shaped plate 11, the second L-shaped plate 12, or the stopper plate 13 may be configured to accept any satisfactory fastening member, such as a screw, pin, *et cetera.*

Corresponding bolt holes 121a drilled into the horizontal contact surface 12a of the second L-shaped plate 12 allow bolts 14a to be inserted through the bolt holes 111 to secure the two plates 11, 12 together.

A stopper plate 13 may be provided to further support the locking frame plate 1 on a side column 41 of vehicle lift 4. At least one row of spaced bolt holes 121 drilled on the vertical contact surface 12b of the second L-shaped plate 12 correspond to at least one row of spaced bolt holes 131a drilled into the stopper plate 13. Bolts 14b, or any other acceptable fastener, may be inserted through bolt holes 121, 131a to secure the vertical contact surface of the stopper plate 13a to the second L-shaped plate 12.

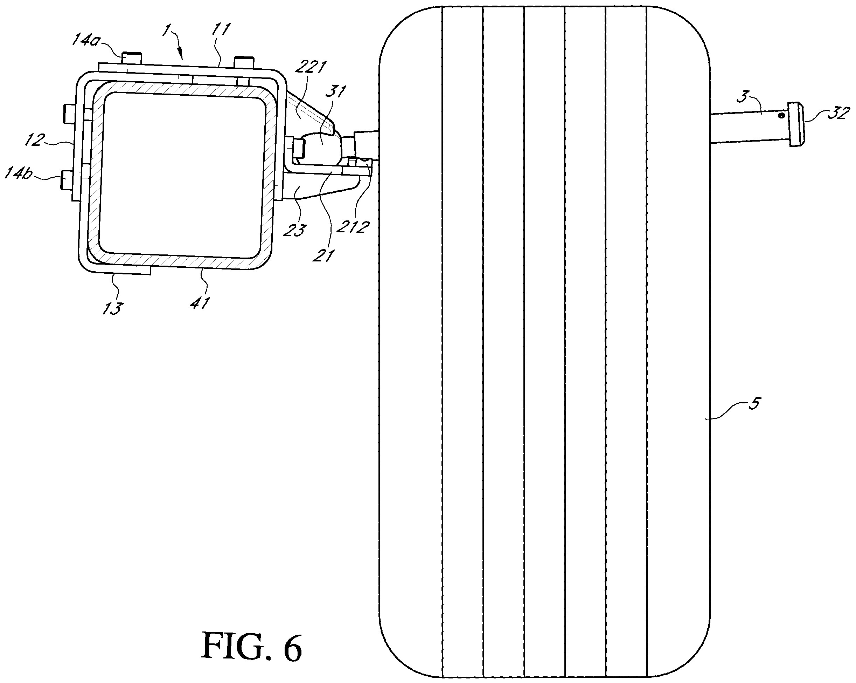

When the first L-shaped plate 11, the second L-shaped plate 12, and the stopper plate 13 are secured together, the locking frame plate 1 is configured to hug the side column 41, as shown in FIG. 6. The locking frame plate 1 may be adjusted by varying the connections discussed above to meet a particular size of the side column 41.

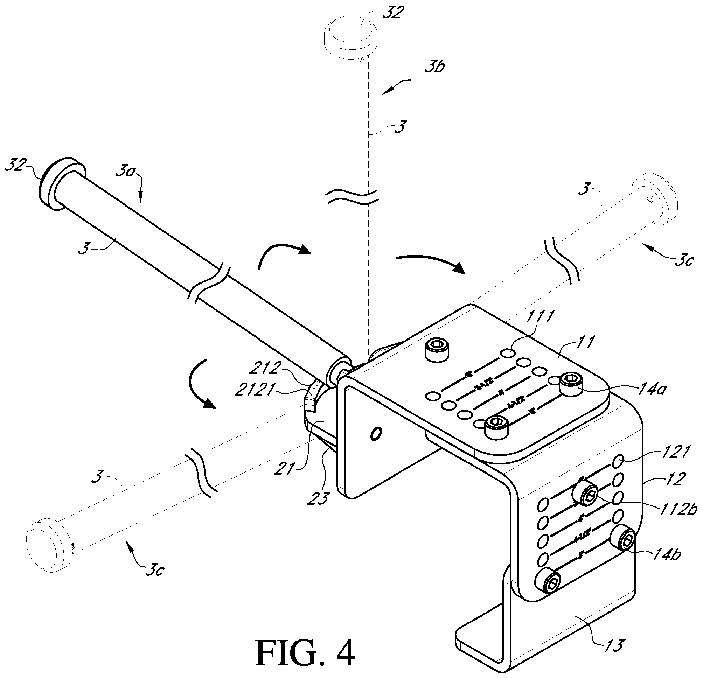

A thru hole 112a in the horizontal contact surface 11a of the first L-shaped plate 11 and a thru hole 112b in the vertical contact surface 12b of the second L-shaped plate 12 (FIG. 4) correspond to holes 122, 132 in the second L-shaped plate 12 and the stopper plate 13, respectively. Bolts 14a may be inserted into the thru holes 112a, 112b and concave holes 122, 132 to contact the side column 41 for ensuring that the locking plate 1 does not slip relative to the side column 41.

A scale may be provided on the outside edge of the horizontal contact surface 11a of the first L-shaped plate 11 (as shown in FIGs. 1 and 2) and on the outside edge of the vertical contact surface 12b of the second L-shaped plate 12 (FIG. 4) to allow users to easily identify dimensions. When the user determines the dimensions of the side column 41, he or she may then adjust the first L-shaped plate 11 and the second L-shaped plate 12 accordingly, and secure the two plates 11, 12 together via the bolts 14a or other acceptable fasteners inserted through the bolt holes 111, 121a. The second L-shaped plate 12 and the stopper plate 13 may be similarly adjusted.

A ball seat 2 and locking seat 22 may be attached to a vertical contact surface 11b of the first L-shaped plate 11, providing a support system for the rod 3. The ball seat 2 may include a ball receiving plate 21 and a support block 23, as shown in FIG. 1.

A cavity 211 in the ball receiving plate 21 receives a sphere 31 on the end of the rod 3, and the locking seat 22 prevents the sphere 31 (and thus the rod 3) from undesirably detaching. In one embodiment, the diameter of the cavity 211 may be slightly smaller than the diameter of the sphere 31 on the end of the rod 3 such that the sphere 31 sits on the cavity 211 without falling through. Additionally, this may allow the sphere 31, and thus the rod 3, to rotate on the ball receiving plate 21.

In some embodiments, the locking seat 22 includes at least two stopper plates 221 secured to the vertical contact surface 11b of the first L-shaped plate 11. Each stopper plate 221 has a curved surface 2211 to prevent the rod 3 from separating from the ball receiving plate 21 while allowing the rod 3 to pivot vertically and horizontally.

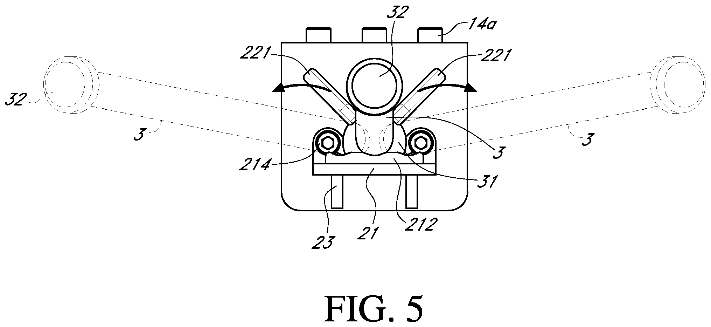

With reference to FIGs. 4 and 5, the rod 3 may be rotated from a ready-for-use position 3a (e.g., a substantially horizontal position wherein the rod 3 is perpendicular to the vertical support surface 11b of the first L-shaped plate 11) to a substantially vertical position 3b when the rod 3 is not in use. Alternatively, the rod 3 may be horizontally to substantially parallel to positions 3c.

When in the ready-for-use position 3a, the rod 3 may be supported by a protruding block 212 located, for example, on an outside edge of the ball receiving plate 21. The protruding block 212 may include various recessed arcs 2121 providing several options for positioning the rod 3 and inhibits movement of the rod 3. As shown in FIG. 5, the rod 3 may be positioned on-center, or at various angles off-center as the recessed arcs 2121 allow.

As may be seen in FIG. 5, the support blocks 23 positioned beneath the ball receiving plate 21 may be provided to further support the ball receiving plate 21 and the rod 3.

The ball receiving plate 21 may be secured to the vertical contact surface 11b of the first L-shaped plate 11 using any acceptable fastening means (e.g., welding, bolts, etc.). Holes 213 in the ball receiving plate 21 may be matched up with holes 213a drilled in the vertical contact surface 11b of the first L-shaped plate 11 to ensure correct placement of the ball receiving plate 21. Bolts 214 may be inserted into the holes 213 to secure the ball receiving plate 21 to the vertical contact surface 11b of the first L-shaped plate 11. Alternative means of securing the ball receiving plate 21 to the first L-shaped plate 11b (for example, welding or chemical bonding) may also be used.

The rod 3 may be cylindrical as shown in FIGs. 1-6. Alternatively, the rod 3 may be rectangular, hexagonal, or octagonal, for example. A stopper 32 may be provided at an opposite end of the rod 3 from the sphere 31 to prevent a wheel 5 from sliding off of the rod 3.

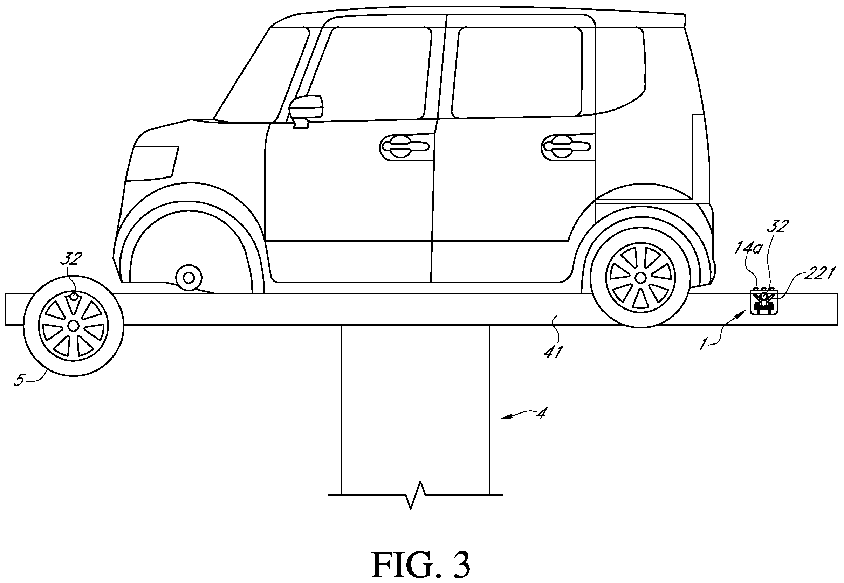

An example of the locking frame plate 1 in use with a vehicle lift 4 is shown in FIG. 3. A side column 41 provides support for a vehicle when the vehicle lift 4 is extended. The locking frame plate 1 may be positioned near the ends of the side column 41 as shown in FIG. 4. However, the locking frame plate 1 may be positioned anywhere on the side column 41 as is convenient for providing maintenance to the vehicle.

The wheel 5 may be positioned on the rod 3 (FIG. 6) while maintenance is being performed on the vehicle. The stopper 32 prevents the wheel 5 from slipping off the end of the rod 3. When maintenance on the vehicle is complete, the wheel 5 is removed from the rod 3, and secured to the vehicle.

Many different arrangements of the various components depicted, as well as components not shown, are possible without departing from the spirit and scope of the present invention. Embodiments of the present invention have been described with the intent to be illustrative rather than restrictive. Alternative embodiments will become apparent to those skilled in the art that do not depart from its scope. A skilled artisan may develop alternative means of implementing the aforementioned improvements without departing from the scope of the present invention.

It will be understood that certain features and subcombinations are of utility and may be employed without reference to other features and subcombinations and are contemplated within the scope of the claims. Not all steps listed in the various figures need be carried out in the specific order described.

## Claims

1. A wheel rack, comprising:
a locking frame plate (1) comprising:
a first L-shaped plate (11);
a second L-shaped plate (12) and
a stopper plate (13);
a ball seat (2) fixed to the locking frame plate (1); and
a rod (3) having a first end with a sphere (31) attached thereto, the sphere (31) being received by the ball seat (2) and the rod (3) being fixed relative to the sphere (31) such that rotation of the rod (3) causes the same rotation in the sphere (31),
wherein the locking frame plate (1) is configured to be fixed to a jamb of a vehicle lift and
wherein the first L-shaped plate (11), the second L-shaped plate (12), and the stopper plate (13) are adjustably secured together to fit around and be fixed to the jamb.

2. Wheel rack according to claim 1, further comprising a locking seat (22).

3. The wheel rack according to any one of the preceding claims 1 or 2, wherein:
at least one aperture in a horizontal contact surface of the second L-shaped plate (12) is configured to align with at least one aperture in a horizontal contact surface of the first L-shaped plate (11); and
the first L-shaped plate (11) and the second L-shaped plate (12) are secured together by inserting at least one fastener through the aligned apertures of the first L-shaped plate (11) and the second L-shaped plate (12).

4. The wheel rack according to claim 3, wherein:
at least one aperture in the vertical contact surface (13a) of the stopper plate (13) is configured to align with at least one aperture in a vertical contact surface (12a) of the second L-shaped plate (12); and
the second L-shaped plate (12) and the stopper plate (13) are secured together by inserting at least one fastener through the aligned apertures in the first L-shaped plate (11) and the second L-shaped plate (12).

5. The wheel rack according to claim 3 or 4, wherein the horizontal contact surface of the first L-shaped plate (11) has at least two rows of apertures such that first L-shaped plate (11) and the second L-shaped plate (12) are adjustably secured together.

6. The wheel rack according to any one of claims 3 to 5, wherein the at least one fastener is selected from the group consisting of: bolts, screws, pins, and rivets.

7. The wheel rack according to any one of claims 3 to 6, wherein the vertical contact surface of the second L-shaped plate (12) has at least two rows of apertures such that the second L-shaped plate (11) and the stopper plate (13) are adjustably secured together.

8. The wheel rack according to any one of the preceding claims, wherein the rod (3) has a second end with a stopper extending therefrom.

9. The wheel rack according to any one of the preceding claims, wherein the ball seat (2) comprises:
a ball receiving plate (21) having a cavity (211);
a protruding block (212); and
a support block (23).

10. The wheel rack of claim 9, wherein the cavity (211) is configured to accept the sphere (31) on the end of the rod (3), and/or wherein the protruding block (212) is secured to the outer edge of the ball receiving plate (21) and has at least one recessed area for accommodating the rod (3).

11. The wheel rack according to any one of claims 2 to 10, wherein the locking seat (22) comprises two plates secured to a vertical contact surface of the first L-shaped plate (11), each plate having a curved surface for securing the sphere on the end of the rod onto the ball seat (2), and/or wherein the sphere (31) is rotatable between the ball receiving plate and the locking seat such that the rod (3) is positioned substantially perpendicular to the vertical contact surface of the first L-shaped plate (11) when in use and substantially parallel to the vertical contact surface of the first L-shaped plate (11) when not in use.

12. The wheel rack according to any one of the preceding claims, wherein the ball seat (22) includes a ball receiving plate (21) having a cavity (211) and a protruding block (212), the protruding blocking (212) being secured to the ball receiving plate (21) and having at least one recessed area for accommodating the rod (3).

13. A method for using a wheel rack, comprising:
providing a locking frame plate (1) comprising:
a first L-shaped plate (11) having a horizontal contact surface and a vertical contact surface;
a second L-shaped plate (12) having a horizontal contact surface and a vertical contact surface; and
a stopper plate (13) having a vertical contact surface;
wherein at least one aperture in the horizontal contact surface of the first L-shaped plate (11) and one aperture in the vertical contact surface of the second L-shaped plate (12) are aligned and securely fastened; and
wherein at least one aperture in the vertical contact surface of the second L-shaped plate (12) and one aperture in the vertical contact surface of the stopper plate (13) are aligned and securely fastened;
providing a rod (3) having a first end and a second end, wherein a sphere (31) is attached to the first end and a stopper is attached to the second end;
providing a ball seat (2) fixed to the locking frame plate, the ball seat (2) further comprising:
a ball receiving plate (21) having a cavity (211); and
a protruding block (212) secured to the ball receiving plate, the protruding block (212) having at least one recessed area for accommodating the rod;
providing a locking seat (22);
securing the sphere (31) between the cavity of the ball receiving plate (21) and the locking seat (22);
rotating the sphere (31) such that the rod (3) is in a substantially perpendicular position relative to the vertical contact surface of the first L-shaped plate (11);
placing the rod (3) in the at least one recessed area of the protruding block (212); and
placing a wheel on the rod (3).

## Patentansprüche

1. Radgestell, das enthält:
eine Verriegelungsrahmenplatte (1), die enthält:
eine erste L-förmige Platte (11);
eine zweite L-förmige Platte (12) und
eine Anschlagplatte (13);
einen Kugelsitz (2), der an der Verriegelungsrahmenplatte (1) fixiert ist; und
eine Stange (3) mit einem ersten Ende, an dem eine Kugel (31) befestigt ist, wobei die Kugel (31) durch den Kugelsitz (2) aufgenommen ist und der Stab (3) relativ zu der Kugel (31) so fixiert ist, dass eine Drehung des Stabes (3) die gleiche Drehung bei der Kugel (31) bewirkt,
wobei die Verriegelungsrahmenplatte (1) dazu ausgelegt ist, an einem Rahmen einer Fahrzeughebevorrichtung fixiert zu sein und
wobei die erste L-förmige Platte (11), die zweite L-förmige Platte (12) und die Anschlagplatte (13) verstellbar aneinander befestigt sind, um um den Rahmen herum zu passen und daran fixiert zu sein.

2. Radgestell nach Anspruch 1, das ferner einen Verriegelungssitz (22) enthält.

3. Radgestell nach einem der vorhergehenden Ansprüche 1 oder 2, wobei:
mindestens eine Öffnung in einer horizontalen Kontaktfläche der zweiten L-förmigen Platte (12) dazu ausgelegt ist, auf mindestens eine Öffnung in einer horizontalen Kontaktfläche der ersten L-förmigen Platte (11) ausgerichtet zu sein; und
die erste L-förmige Platte (11) und die zweite L-förmige Platte (12) aneinander befestigt sind, indem mindestens ein Befestigungselement durch die ausgerichteten Öffnungen der ersten L-förmigen Platte (11) und der zweiten L-förmigen Platte (12) eingesetzt ist.

4. Radgestell nach Anspruch 3, wobei:
mindestens eine Öffnung in der vertikalen Kontaktfläche (13a) der Anschlagplatte (13) dazu ausgelegt ist, auf mindestens eine Öffnung in einer vertikalen Kontaktfläche (12a) der zweiten L-förmigen Platte (12) ausgerichtet zu sein; und
die zweite L-förmige Platte (12) und die Anschlagplatte (13) aneinander befestigt sind, indem mindestens ein Befestigungselement durch die ausgerichteten Öffnungen in der ersten L-förmigen Platte (11) und der zweiten L-förmigen Platte (12) eingesetzt ist.

5. Radgestell nach Anspruch 3 oder 4, wobei die horizontale Kontaktfläche der ersten L-förmigen Platte (11) mindestens zwei Reihen von Öffnungen aufweist, so dass die erste L-förmige Platte (11) und die zweite L-förmige Platte (12) verstellbar aneinander befestigt sind.

6. Radgestell nach einem der Ansprüche 3 bis 5, wobei das mindestens eine Befestigungselement aus der folgenden Gruppe gewählt ist: Bolzen, Schrauben, Stifte und Nieten.

7. Radgestell nach einem der Ansprüche 3 bis 6, wobei die vertikale Kontaktfläche der zweiten L-förmigen Platte (12) mindestens zwei Reihen von Öffnungen aufweist, so dass die zweite L-förmige Platte (11) und die Anschlagplatte (13) verstellbar aneinander befestigt sind.

8. Radgestell nach einem der vorhergehenden Ansprüche, wobei die Stange (3) ein zweites Ende mit einem Anschlag, der sich daraus erstreckt, aufweist.

9. Radgestell nach einem der vorhergehenden Ansprüche, wobei der Kugelsitz (2) enthält:
eine Kugelaufnahmeplatte (21) mit einem Hohlraum (211);
einen vorstehenden Block (212); und
einen Stützblock (23).

10. Radgestell nach Anspruch 9, wobei der Hohlraum (211) dazu ausgelegt ist, die Kugel (31) an dem Ende der Stange (3) entgegenzunehmen und/oder wobei der vorstehende Block (212) an der Außenkante der Kugelaufnahmeplatte (21) befestigt ist und mindestens einen ausgesparten Bereich zum Aufnehmen der Stange (3) aufweist.

11. Radgestell nach einem der Ansprüche 2-10, wobei der Verriegelungssitz (22) zwei Platten, die an einer vertikalen Kontaktfläche der ersten L-förmigen Platte (11) befestigt sind, enthält, wobei jede Platte eine gekrümmte Oberfläche zum Befestigen der Kugel an dem Ende der Stange auf dem Kugelsitz (2) aufweist und/oder wobei die Kugel (31) zwischen der Kugelaufnahmeplatte und dem Verriegelungssitz so drehbar ist, dass die Stange (3) bei Gebrauch im Wesentlichen senkrecht zu der vertikalen Kontaktfläche der ersten L-förmigen Platte (11) positioniert ist und bei Nichtgebrauch im Wesentlichen parallel zu der vertikalen Kontaktfläche der ersten L-förmigen Platte (11) positioniert ist.

12. Radgestell nach einem der vorhergehenden Ansprüche, wobei der Kugelsitz (22) eine Kugelaufnahmeplatte (21) mit einem Hohlraum (211) und einen vorstehenden Block (212) enthält, wobei der vorstehende Block (212) an der Kugelaufnahmeplatte (21) befestigt ist und mindestens einen ausgesparten Bereich zum Aufnehmen der Stange (3) aufweist.

13. Verfahren zum Verwenden eines Radgestells, das enthält:
Bereitstellen einer Verriegelungsrahmenplatte (1), die enthält:
eine erste L-förmige Platte (11), die eine horizontale Kontaktfläche und eine vertikale Kontaktfläche aufweist;
eine zweite L-förmige Platte (12), die eine horizontale Kontaktfläche und eine vertikale Kontaktfläche aufweist; und
eine Anschlagplatte (13), die eine vertikale Kontaktfläche aufweist;
wobei mindestens eine Öffnung in der horizontalen Kontaktfläche der ersten L-förmigen Platte (11) und eine Öffnung in der horizontalen Kontaktfläche der zweiten L-förmigen Platte (12) aufeinander ausgerichtet und sicher befestigt sind; und
wobei mindestens eine Öffnung in der vertikalen Kontaktfläche der zweiten L-förmigen Platte (12) und eine Öffnung in der vertikalen Kontaktfläche der Anschlagplatte (13) aufeinander ausgerichtet und sicher befestigt sind;
Bereitstellen einer Stange (3) mit einem ersten Ende und einem zweiten Ende, wobei eine Kugel (31) an dem ersten Ende angebracht ist und ein Anschlag an dem zweiten Ende angebracht ist;
Bereitstellen eines Kugelsitzes (2), der an der Verriegelungsrahmenplatte fixiert ist, wobei der Kugelsitz (2) ferner enthält:
eine Kugelaufnahmeplatte (21) mit einem Hohlraum (211); und
einen vorstehenden Block (212), der an der Kugelaufnahmeplatte befestigt ist, wobei der vorstehende Block (212) mindestens einen ausgesparten Bereich zum Aufnehmen der Stange aufweist;
Bereitstellen eines Verriegelungssitzes (22);
Befestigen der Kugel (31) zwischen dem Hohlraum der Kugelaufnahmeplatte (21) und dem Verriegelungssitz (22);
Drehen der Kugel (31) so, dass die Stange (3) in einer im Wesentlichen senkrechten Position relativ zu der vertikalen Kontaktfläche der ersten L-förmigen Platte (11) ist;
Anordnen der Stange (3) in dem mindestens einen ausgesparten Bereich des vorstehenden Blocks (212); und
Anordnen eines Rades auf der Stange (3).

## Revendications

1. Grille de roue, comportant :
une plaque de châssis de verrouillage (1) comportant :
une première plaque en forme de L (11) ;
une seconde plaque en forme de L (12) ; et
une plaque de butée (13) ;
une cage de rotule (2) fixée à la plaque de châssis de verrouillage (1) ; et
une tige (3) ayant une première extrémité avec une sphère (31) fixée à celle-ci, la sphère (31) étant reçue par la cage de rotule (2) et la tige (3) étant fixée par rapport à la sphère (31) de sorte que la rotation de la tige (3) entraîne la même rotation dans la sphère (31),
dans laquelle la plaque de châssis de verrouillage (1) est configurée pour être fixée à un montant d'un pont élévateur et
dans laquelle la première plaque en forme de L (11), la seconde plaque en forme de L (12), et la plaque de butée (13) sont fixées ensemble de manière réglable le pour s'ajuster autour du montant et être fixées à celui-ci.

2. Grille de roue selon la revendication 1, comportant en outre une cage de verrouillage (22).

3. Grille de roue selon l'une quelconque des revendications 1 ou 2, dans laquelle :
au moins une ouverture dans une surface de contact horizontal de la seconde plaque en forme de L (12) est configurée pour s'aligner avec au moins une ouverture dans une surface de contact horizontal de la première plaque en forme de L (11) ; et
la première plaque en forme de L (11) et la seconde plaque en forme de L (12) sont fixées ensemble en insérant au moins une pièce de fixation à travers les ouvertures alignées de la première plaque en forme de L (11) et de la seconde plaque en forme de L (12).

4. Grille de roue selon la revendication 3, dans laquelle :
au moins une ouverture dans la surface de contact vertical (13a) de la plaque de butée (13) est configurée pour être alignée avec au moins une ouverture dans une surface de contact vertical (12a) de la seconde plaque en forme de L (12) ; et
la seconde plaque en forme de L (12) et la plaque de butée (13) sont fixées ensemble en insérant au moins une pièce de fixation à travers les ouvertures alignées dans la première plaque en forme de L (11) et dans la seconde plaque en forme de L (12).

5. Grille de roue selon la revendication 3 ou 4, dans laquelle la surface de contact horizontal de la première plaque en forme de L (11) dispose d'au deux rangées d'ouverture de sorte que la première plaque en forme de L (11) et la seconde plaque en forme de L (12) sont fixées ensemble de manières réglable.

6. Grille de roue selon l'une quelconque des revendications 3 à 5, dans laquelle la au moins une pièce de fixation est choisie parmi le groupe constitué de : boulons, vis, goupilles et rivets.

7. Grille de roue selon l'une quelconque de revendications 3 à 5, dans laquelle la surface de contact vertical de la seconde plaque en forme de L (12) présente au moins deux rangées d'ouverture de sorte que la seconde plaque en forme de L (11) et la plaque de butée (13) sont fixées ensemble de manières réglable.

8. Grille de roue selon l'une quelconque des revendications précédentes, dans laquelle la tige (3) présente une seconde extrémité avec une butée qui s'étend à partir de celle-ci.

9. Grille de roue selon l'une quelconque des revendications précédentes, dans laquelle la cage de rotule (2) comporte :
une plaque de réception de rotule (21) ayant une cavité (211) ;
un bloc en saillie (212) ; et
un bloc de support (23).

10. Grille de roue selon la revendication 9, dans laquelle la cavité (211) est configurée pour accepter la sphère (31) sur l'extrémité de la tige (3), et/ou dans laquelle le bloc en saillie (112) est fixé au bord externe de la plaque de réception de rotule (21) et présente au moins une zone évidée pour recevoir la tige (3).

11. Grille de roue selon l'une quelconque des revendications 2 à 10, dans laquelle la cage de verrouillage (22) comporte deux plaques fixées à une surface de contact vertical de la première plaque en forme de L (11), chaque plaque ayant une surface incurvée pour fixer la sphère sur l'extrémité de la tige sur la cage de rotule (2), et/ou dans laquelle la sphère (31) est orientable entre la plaque de réception de rotule et la cage de verrouillage de sorte que la tige (3) est positionnée de manière sensiblement perpendiculaire à la surface de contact vertical de la première plaque en forme de L (11) lorsqu'elle est utilisée et de manière sensiblement parallèle à la surface de contact vertical de la première plaque en forme de L (11) lorsqu'elle n'est pas utilisée.

12. Grille de roue selon l'une quelconque des revendications précédentes, dans laquelle la cage de rotule (22) comprend une plaque de réception de rotule (21) ayant une cavité (211) et un bloc en saillie (212), le bloc en saillie (212) étant fixé à la plaque de réception de rotule (21) et ayant au moins une zone évidée pour recevoir la tige (3).

13. Procédé pour utiliser une grille de roue, comportant les étapes consistant à :
fournir une plaque de châssis de verrouillage (1) comportant :
une première plaque en forme de L (11) ayant une surface de contact horizontal et une surface de contact vertical ;
une seconde plaque en forme de L (12) ayant une surface de contact horizontal et une surface de contact vertical ; et
une plaque de butée (13) ayant une surface de contact vertical ;
dans lequel au moins une ouverture dans la surface de contact horizontal de la première plaque en forme de L (11) et une ouverture dans la surface de contact vertical de la seconde plaque en forme de L (12) sont alignées et fixées de manière sécurisée ; et
dans lequel au moins une ouverture dans la surface de contact vertical de la seconde plaque en forme de L (12) et une ouverture dans la surface de contact vertical de la plaque de butée (13) sont alignées et fixées de manière sécurisée ;
fournir une tige (3) ayant une première extrémité et une seconde extrémité, une sphère (31) étant fixée à la première extrémité et une butée étant fixée à la seconde extrémité ;
fournir une cage de rotule (2) fixée à la plaque de châssis de verrouillage, la cage de rotule (2) comportant en outre :
une plaque de réception de rotule (21) ayant une cavité (211) ; et
un bloc en saillie (212) fixé à la plaque de réception de rotule, le bloc en saillie (212) ayant au moins une zone évidée pour recevoir la tige ;
fournir une cage de verrouillage (22) ;
fixer la sphère (31) entre la cavité de la plaque de réception de rotule (21) et la cage de verrouillage (22) ;
mettre la sphère en rotation (31) de sorte que la tige (3) est dans une position sensiblement perpendiculaire par rapport à la surface de contact vertical de la première plaque en forme de L (11) ;
positionner la tige (3) dans au moins une zone évidée du bloc en saillie (212) ; et
positionner une roue sur la tige (3).
